# EUROPEAN PATENT SPECIFICATION

(11) **EP 3 147 200 B1**
(45) Date of publication and mention of the grant of the patent: **13.12.2017**
(21) Application number: 16175963.4
(22) Date of filing: 23.06.2016
(51) Int. Cl.: B63B 27/36, B63B 35/00

(54) **MARINE STRUCTURE INSTALLATION VESSEL AND METHOD OF INSTALLING MARINE STRUCTURE**
INSTALLATIONSSCHIFF FÜR MEERESSTRUKTUR UND VERFAHREN ZUR INSTALLATION EINER MEERESSTRUKTUR
VAISSEAU D'INSTALLATION DE STRUCTURE MARINE ET PROCÉDÉ D'INSTALLATION D'UNE STRUCTURE MARINE

(30) Priority: 22.09.2015 KR 20150134163
(43) Date of publication of application: 29.03.2017
(73) Proprietor: Korea Electric Power Corporation, Jeollanam-do 58217 (KR)
(72) Inventor: KIM, Seok Tae, Daejeon 305-760 (KR); LEE, Jun Shin, Daejeon 305-760 (KR); PARK, Joon Young, Daejeon 305-760 (KR); JEON, In Sung, Daejeon 305-760 (KR); KIM, Ji Young, Daejeon 305-760 (KR); KWAK, Ji Yeong, Daejeon 305-760 (KR)
(74) Representative: Zacco Sweden AB

(56) References cited:
- EP-A1- 2 641 825
- WO-A1-2015/030480
- WO-A2-2004/087494

## Description

### BACKGROUND

### 1. Field of the Invention

The present invention relates to a marine structure installation vessel and a method of installing a marine structure, and more specifically, to a marine structure installation vessel capable of easily installing a marine structure and a method of installing a marine structure.

### 2. Discussion of Related Art

Generally, a marine structure, such as a wind turbine, is installed in the ocean. A marine foundation is seated on the ocean floor to support the marine structure. The marine foundation is mounted on a barge ship or a ship and is moved to an installation position. The marine structure is loaded on a jack-up leg ship and is moved to the installation position. The jack-up leg ship lowers a jack-up leg to the ocean floor and raises a hull to a level higher than sea level. The marine structure is installed on the marine foundation using a crane.

However, conventionally, the marine structure has been installed in the ocean using an expensive jack-up leg ship, and thus the installation of the marine structure has been complicated. Also, because the jack-up leg is installed on a sludgy ground of the ocean floor, the jack-up leg has to be raised after the installation of the marine structure. When a spud can disposed on a lower end of the jack-up leg is not pulled out, the jack-up leg has to be cut.

Therefore, there is a necessity for improvement of the above-described problems.

The background of the present invention is disclosed in Korean Laid-open Patent Application No. 2004-0037263 (Published on 2004. 05. 04, Title: Method for Establishing a Foundation in Particular for a Tower of a Wind Energy Plant). An other marine structure installation ship is disclosed in document WO 2004/087494, the ship being able to load, transport, unload (by submerging it's hull) and install a marine structure, e.g. a wind turbine, including its foundation and superstructure.

### SUMMARY OF THE INVENTION

The present invention is directed to a marine structure installation vessel capable of easily installing a marine structure and a method of installing a marine structure.

According to an aspect of the present invention, there is provided a marine structure installation vessel including a hull moving while floating at sea level, wherein a seawater chamber is formed therein and a marine foundation is loaded thereon, a docking device mounted on the hull and configured to support a marine structure to be assembled on the marine foundation, and a pumping device configured to supply seawater to the seawater chamber to submerge the hull and float the marine foundation from the hull by buoyancy, and drain the seawater from the seawater chamber so that the hull floats for assembling the marine structure on the marine foundation. The marine structure installation vessel may further include a position fixing unit connected to a wire rope and configured to fix a position of the hull by being submerged in a sea, and a winch installed at the hull and configured to control the position of the hull by winding or unwinding the wire rope.

A semi-submerged column may be formed standing upright on a circumferential part of the hull, and the winch may be disposed on the semi-submerged column.

The hull may include a refloating hole portion formed therein so that the marine structure is lowered under water to be installed on the marine foundation.

The docking device may include a docking deck installed on the refloating hole portion, and a refloating device movably installed on the docking deck and configured to move the marine structure to a lower side of the refloating hole portion.

The refloating device may include docking guide units movably installed on both sides of the refloating hole portion, a support column installed on the docking guide unit to be moved by the docking guide units, and a lifting arm installed in the support columns to be lifted and configured to support the marine structure is supported.

The marine foundation may include a self-weight control tank unit configure to move while floating at sea level, and submerged and installed on an ocean floor as seawater is supplied, a monopod unit installed in the self-weight control tank unit to be lowered and connected to the marine structure, a guide bucket unit installed under the monopod unit and seated on the ocean floor by discharging the seawater, and a leg bucket unit installed under the self-weight control tank unit.

The marine foundation may further include a thrusting device installed in the self-weight control tank unit and configured to control a submerged installation position of the self-weight control tank unit by applying a thrust to the self-weight control tank unit.

The thrust device may include a belt unit coupled to the self-weight control tank unit, and a propeller unit installed at the belt unit and configured to generate a thrust at the self-weight control tank unit.

According to another aspect of the present invention, there is provided a method of installing a marine structure, the method includes moving a hull on which a marine foundation is mounted to an installation position while the hull is floating at sea level, supplying, by a pumping device coupled to the hull, seawater to a seawater chamber of the hull after the hull arrives at the installation position, floating the marine foundation by buoyancy when the seawater is supplied to the seawater chamber to submerge the hull, moving the marine foundation to the installation position while the marine foundation is floating, supplying seawater to the marine foundation to submerge and install the marine foundation on an ocean floor, moving the hull and positioning a marine structure supported on a docking device mounted on the hull at an upper side of the marine foundation, lowering the marine structure by the docking device and assembling the marine structure on the marine foundation; and draining, by the pumping device, the seawater from the seawater chamber to float the hull at sea level.

The method may further include, after the moving of the marine foundation to the installation position while the marine foundation is floating, draining, by the pumping device, the seawater from the seawater chamber to float the hull at sea level, and moving the hull by a tug so that the marine structure is positioned above the marine foundation.

The moving of the hull by the tug so that the marine structure is positioned above the marine foundation may include moving the hull to an upper side of the marine foundation by the tug, submerging a position fixing unit connected to the hull by a wire rope in the water, and winding or unwinding, by winches installed on the hull, the wire rope to control a position of the hull.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view illustrating a marine structure installation vessel according to one embodiment of the present invention;
FIG. 2 is a perspective view illustrating a docking device in the marine structure installation vessel according to one embodiment of the present invention;
FIG. 3 is a perspective view illustrating a marine foundation mounted on the marine structure installation vessel according to one embodiment of the present invention;
FIG. 4 is a side view illustrating movement of the marine structure installation vessel according to one embodiment of the present invention while floating;
FIG. 5 is a side view illustrating a state in which the marine structure installation vessel according to one embodiment of the present invention is submerged;
FIG. 6 is a plan view illustrating movement of the marine foundation in the marine structure installation vessel according to one embodiment of the present invention outward from the marine structure installation vessel while floating;
FIG. 7 is a plan view illustrating movement of the marine foundation in the marine structure installation vessel according to one embodiment of the present invention to an installation position while floating;
FIG. 8 is a side view illustrating position adjustment of the marine structure installation vessel so that a marine structure in the marine structure installation vessel according to one embodiment of the present invention corresponds to the marine foundation;
FIG. 9 is a side view illustrating assembly of a marine structure in the marine structure installation vessel according to one embodiment of the present invention and a monopod unit of the marine foundation;
FIG. 10 is a side view illustrating assembly position adjustment of the marine foundation and the marine structure by operating winches after wire ropes are connected to the marine structure when the marine structure in the marine structure installation vessel according to one embodiment of the present invention is coupled with the monopod unit of the marine foundation; and
FIG. 11 is a flowchart illustrating a method of installing a marine structure according to one embodiment of the present invention.

### DETAILED DESCRIPTION OF EXEMPLARY EMBODIMENTS

Hereinafter, one embodiment of a marine structure installation vessel and a method of installing a marine structure according to the present invention will be described with reference to drawings. In the process of describing the marine structure installation vessel and the method of installing a marine structure, the thickness of line, the size of a component, or the like shown in the drawings may be exaggerated for convenience and clarity of explanation. Some terms described below are defined by considering functions in the present invention and meanings may vary depending on, for example, a user or operator's intentions or customs. Therefore, the meanings of terms should be interpreted based on the scope throughout this specification.

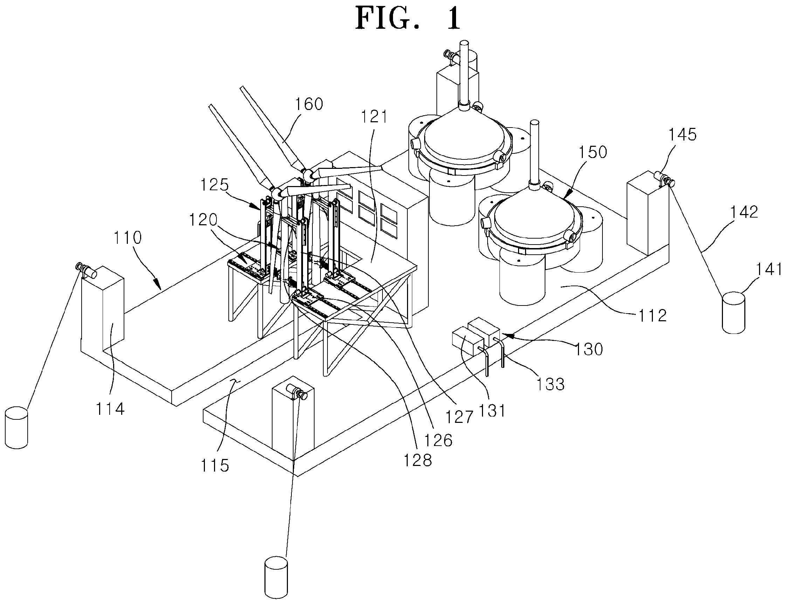

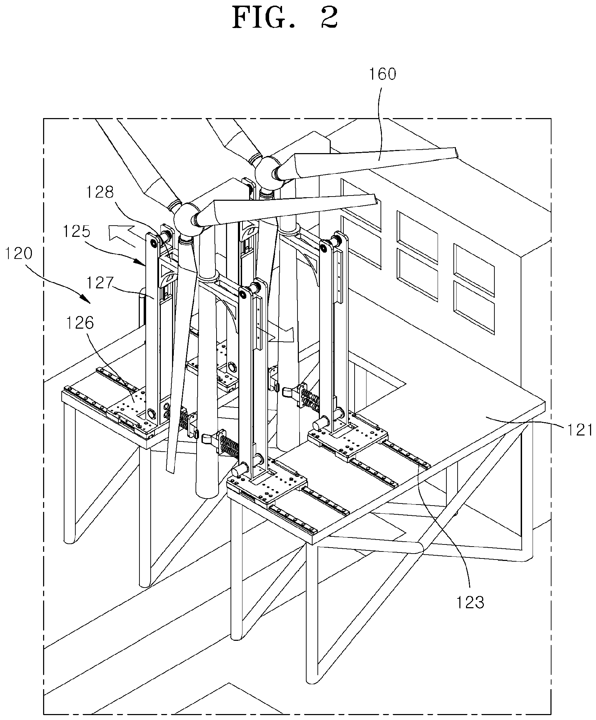

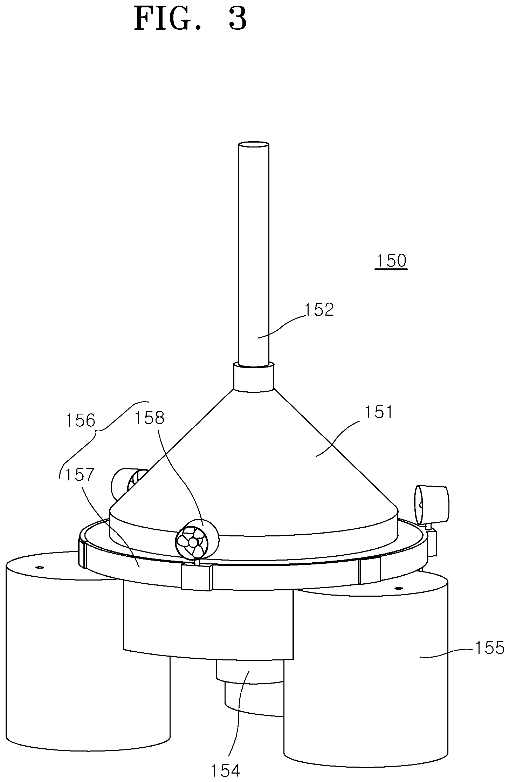

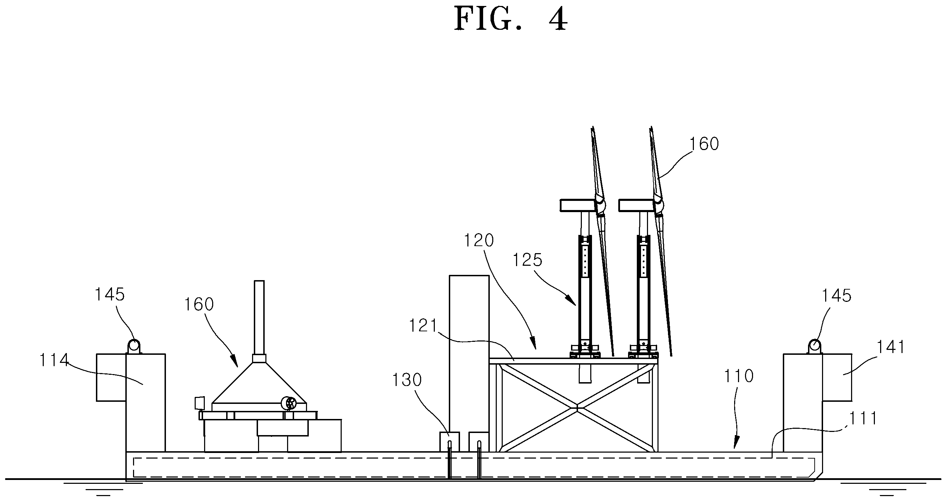

FIG. 1 is a perspective view illustrating a marine structure installation vessel according to one embodiment of the present invention, FIG. 2 is a perspective view illustrating a docking device in the marine structure installation vessel according to one embodiment of the present invention, FIG. 3 is a perspective view illustrating a marine foundation mounted on the marine structure installation vessel according to one embodiment of the present invention, and FIG. 4 is a side view illustrating movement of the marine structure installation vessel according to one embodiment of the present invention while floating.

Referring to FIGS. 1 to 4, a marine structure installation vessel according to one embodiment of the present invention includes a hull 110, a docking device 120, and a pumping device 130.

The hull 110 moves while floating at sea level and has a seawater chamber 111 formed therein. The hull 110 has a loading yard 112 on which a marine foundation 150 is loaded. A barge ship in which a power source is not installed is suggested as the hull 110. The marine foundation 150 will be described below.

The hull 110 includes a refloating hole portion 115 formed so that marine structures 160 are lowered under water to be installed on the marine foundation 150. The marine structure 160 is a device installed in the water such as a wind turbine. The refloating hole portion 115 is formed in the hull 110, and thus the marine structure 160 may be lowered in the water through the refloating hole portion 115.

The docking device 120 is mounted on the hull 110. The plurality of marine structures 160 are supported on the docking device 120. The docking device 120 includes a docking deck 121 installed above the refloating hole portion 115, and a refloating device 125 movably installed on the docking deck 121 to move the marine structure 160 toward the refloating hole portion 115. The docking deck 121 may be formed as a structure in which a lower portion of a supporting plate is supported by a trussed beam. The refloating device 125 moves the marine structure 160 downward through the refloating hole portion 115, and thus there is no need to use a crane to install the marine structure 160. Therefore, manufacturing costs of the marine structure installation vessel can be reduced.

The refloating device 125 includes docking guide units 126 movably installed on both sides of the refloating hole portion 115, support columns 127 installed on the docking guide units 126 to be moved by the docking guide units 126, and a lifting arm 128 which is installed in the support columns 127 to be lifted and on which the marine structure 160 is supported. The lifting arm 128 lowers the marine structure 160, and thus the marine structure 160 may be easily installed on the marine foundation 150.

The docking guide units 126 are movably installed along rails 123 installed on the docking deck 121. The rails 123 are vertically installed on both sides of the refloating hole portion 115 to the refloating hole portion 115. The docking guide units 126 move in a lateral direction of the refloating hole portion 115. The support columns 127 are vertically installed on the docking guide units 126. The plurality of support columns 127 are disposed on both sides of the refloating hole portion 115. The support columns 127 are installed on both sides of the marine structure 160. The lifting arm 128 is movably installed along a longitudinal direction of the support columns 127. The lifting arm 128 may be applied in various forms.

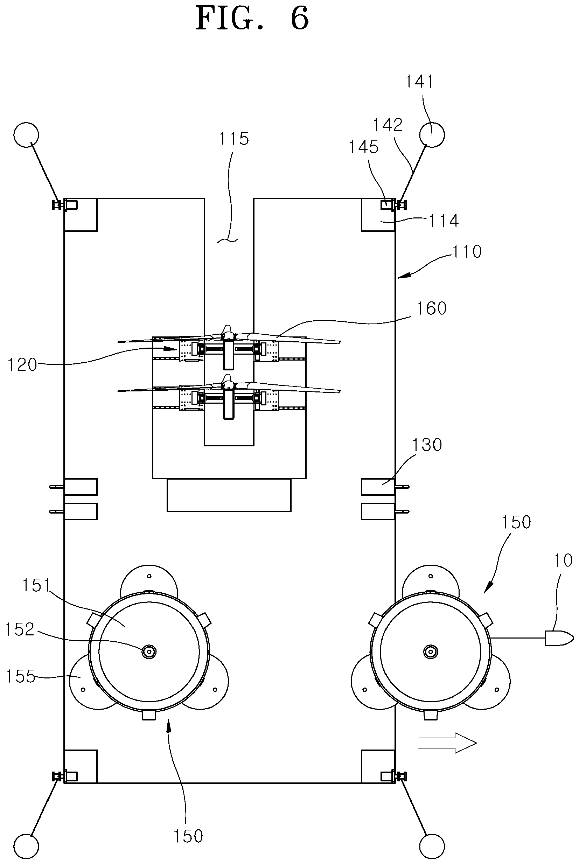

The pumping device 130 supplies seawater to the seawater chamber 111 to submerge the hull 110, and the marine foundation 150 floats from the hull 110 by buoyancy. The pumping device 130 drains the seawater from the seawater chamber 111 to float the hull 110 to sea level. Therefore, the pumping device 130 drains the seawater from the seawater chamber 111 to float the hull 110, and then the hull 110 may be moved by a tug 10 (see FIG. 6). Also, the pumping device 130 supplies seawater to the seawater chamber 111 to submerge the hull 110. Therefore, when the pumping device 130 supplies seawater to the seawater chamber 111 to submerge the hull 110 under sea level, the marine foundation 150 floats at sea level. The marine foundation 150 floats at sea level by buoyancy, and thus the marine foundation 150 may be easily moved to an installation position.

The pumping device 130 includes a seawater pump 131 pumping seawater, and a seawater moving pipe 133 moving the seawater pumped from the seawater pump 131 to the sea or the seawater chamber 111.

The marine structure installation vessel further includes a plurality of position fixing units 141 connected to wire ropes 142 and fixing a position of the hull 110 by being submerged in the water, and a plurality of winches 145 installed on the hull 110 and controlling the position of the hull 110 by winding or unwinding the wire ropes 142. The winches 145 may control the position of the hull 110 by winding or unwinding the wire ropes 142, and thus the marine structure 160 may be accurately positioned at the installation position of the marine foundation 150. For example, when the marine foundation 150 is positioned to the left of the marine structure 160, winches 145 positioned on a left side of the hull 110 wind the wire ropes 142, and winches 145 positioned on a right side of the hull 110 unwind the wire ropes 142, thereby the hull 110 may be moved to the left. Therefore, the marine structure 160 may be easily moved to an upper side of the marine foundation 150.

The position fixing units 141 may each be formed in a hollow container form. In this case, each of the position fixing units 141 includes a valve (not shown) installed therein, and is submerged by opening the valve. Also, an anchor used for a general ship may be applied as the position fixing unit 141. The position fixing units 141 may be positioned a predetermined distance away from the hull 110 by the tug 10.

Semi-submerged columns 114 are formed standing upright at a circumferential part of the hull 110, and the winches 145 are disposed on the semi-submerged columns 114. When the pumping device 130 supplies seawater to the seawater chamber 111 to submerge the hull 110, the upper sides of the semi-submerged columns 114 are not submerged under sea level. Therefore, the winches 145 can be prevented from being damaged by preventing the winches 145 from being permeated by water.

The semi-submerged columns 114 are installed at four edges of the hull 110, and the winches 145 are installed on the semi-submerged columns 114, respectively. The winches 145 are installed at the four edges of the hull 110, and the hull 110 may be moved in various directions.

The marine foundation 150 includes a self-weight control tank unit 151, a monopod unit 152, a guide bucket unit 154, and a leg bucket unit 155.

The self-weight control tank unit 151 moves while floating on the sea, and is submerged and installed on the ocean floor when seawater is supplied. The self-weight control tank unit 151 moves while floating, and may move the marine foundation 150 to the installation position using one tug 10. Therefore, a barge ship and a ship may be disused to mount the self-weight control tank unit 151, and thus delivery costs of the marine foundation can be reduced.

The self-weight control tank unit 151 has a conical upper side. A ringshaped skirt (not shown) is formed along a circumference of the self-weight control tank unit 151.

The self-weight control tank unit 151 includes a guide unit (not shown) formed so that the monopod unit 152 is movably inserted, a chamber unit (not shown) formed so that seawater is supplied, and a hose connection unit (not shown) formed to be connected to a pumping hose. The guide unit is formed in a cylindrical pipe shape. The hose connection unit is connected to an upper side of the self-weight control tank unit 151.

The chamber unit is formed in the self-weight control tank unit 151 to accommodate air when the marine foundation 150 is moved to the installation position, and thus buoyancy is applied to the self-weight control tank unit 151. When the marine foundation 150 reaches the installation position, seawater is supplied to the self-weight control tank unit 151, and thus the self-weight control tank unit 151 is submerged in the water.

The guide unit is formed to vertically pass through the center of the self-weight control tank unit 151. Since the guide unit is formed to pass through the center of the self-weight control tank unit 151, the monopod unit 152 is movably installed in the center of the self-weight control tank unit 151. Therefore, the monopod unit 152 may be stably supported by the self-weight control tank unit 151.

The marine foundation 150 further includes an opening and closing valve (not shown) installed in the self-weight control tank unit 151 to supply seawater to the self-weight control tank unit 151 or block the supply of seawater. When the opening and closing valve is opened, seawater is supplied to the self-weight control tank unit 151. When the opening and closing valve is closed, the supply of seawater to the self-weight control tank unit 151 is stopped.

Therefore, the self-weight of the self-weight control tank unit 151 is controlled depending on the quantity of the supplied water, and thus the self-weight of the self-weight control tank unit 151 can be controlled depending on the strength of the ground. For example, the self-weight of the self-weight control tank unit 151 may be reduced when the strength of ground is relatively weak, and the self-weight control tank unit 151 may be increased when the strength of ground is relatively strong. The self-weight of the self-weight control tank unit 151 is controlled depending on the strength of ground, and the self-weight control tank unit 151 is positioned to be parallel to the ground, and thus the monopod unit 152 may be vertically positioned.

The monopod unit 152 is installed in the self-weight control tank unit 151 to be lowered. The marine structure 160, such as a wind turbine, is connected to an upper side of the monopod unit 152. The monopod unit 152 is formed in a cylindrical pipe shape.

The guide bucket unit 154 is installed under the monopod unit 152 and is mounted on the ocean floor by discharging seawater therefrom. The guide bucket unit 154 is formed in a cylindrical shape with an open lower side. The guide bucket unit 154 is mounted on the ocean floor and then the self-weight control tank unit 151 is lowered to the ocean floor. Therefore, when the self-weight control tank unit 151 is lowered, the self-weight control tank unit 151 can be prevented from leaving the installation position due to a tide or wave.

The guide bucket unit 154 is formed in a cylindrical shape with the open lower side. The inside of the guide bucket unit 154 communicates with the inside of the monopod unit 152. The pumping hose reaches the guide bucket unit 154 through the monopod unit 152, and seabed sediment in the guide bucket unit 154 is discharged to the outside through the pumping hose. Therefore, the guide bucket unit 154 is lowered into the seabed sediment and is seated on the ground of the ocean floor.

The leg bucket unit 155 is formed in a cylindrical shape with an open lower side. The leg bucket unit 155 includes the hose connection unit (not shown) to be connected to the pumping hose. The hose connection unit is disposed on an upper side of the leg bucket unit 155. As the pumping hose is inserted into the hose connection unit to suction the seabed sediment in the leg bucket unit 155, the leg bucket unit 155 is lowered into the seabed sediment. The hose connection unit is a hole formed at the upper side of the leg bucket unit 155.

The marine foundation 150 further includes a thrusting device 156 installed in the self-weight control tank unit 151 and preventing a change in a submerged installation position of the self-weight control tank unit 151 by applying a thrust to the self-weight control tank unit 151. The thrusting device 156 applies a thrust to the self-weight control tank unit 151 when the self-weight control tank unit 151 is lowered, thereby preventing the self-weight control tank unit 151 from leaving the installation position due to a tide or wave. For example, the thrusting device 156 generates a thrust so that the self-weight control tank unit 151 is moved to the installation position when the self-weight control tank unit 151 slightly leaves the installation position after the position of the marine foundation 150 is measured by a global positioning system (GPS). Therefore, the marine foundation 150 may be seated on the correct installation position.

The thrusting device 156 includes a belt unit 157 coupled to the self-weight control tank unit 151 and a plurality of propeller units 158 installed at the belt unit 157 and generating a thrust at the self-weight control tank unit 151. The plurality of propeller units 158 are disposed along the circumference of the self-weight control tank unit 151 at regular gaps. In this case, when the self-weight control tank unit 151 is swept to one side by a tide or wave, the propeller units 158 positioned on the one side of the self-weight control tank unit 151 are operated to prevent the self-weight control tank unit 151 from leaving the installation position.

The belt unit 157 includes a plurality of band units (not shown) disposed to surround the self-weight control tank unit 151, and a belt unfastening unit (not shown) attaching adjacent ends of the plurality of band units (not shown) or detaching the adjacent ends of the plurality of band units (not shown) from each other. When the marine foundation 150 is completely seated on the ocean floor, the belt unfastening unit separates the adjacent ends of the band units (not shown) from each other, and thus the thrusting device 156 may be separated from the self-weight control tank unit 151 and may be collected.

An operation of the marine structure installation vessel according to one embodiment of the present invention configured as described above will be described.

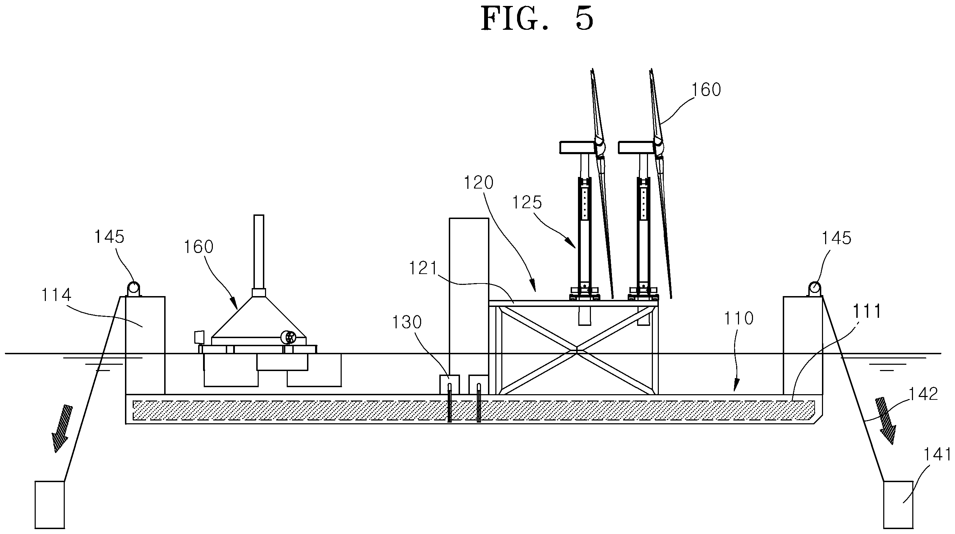

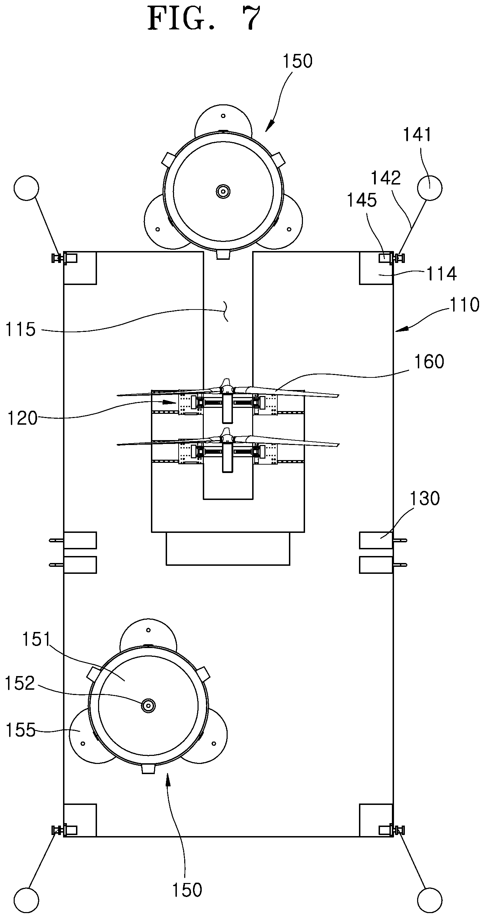

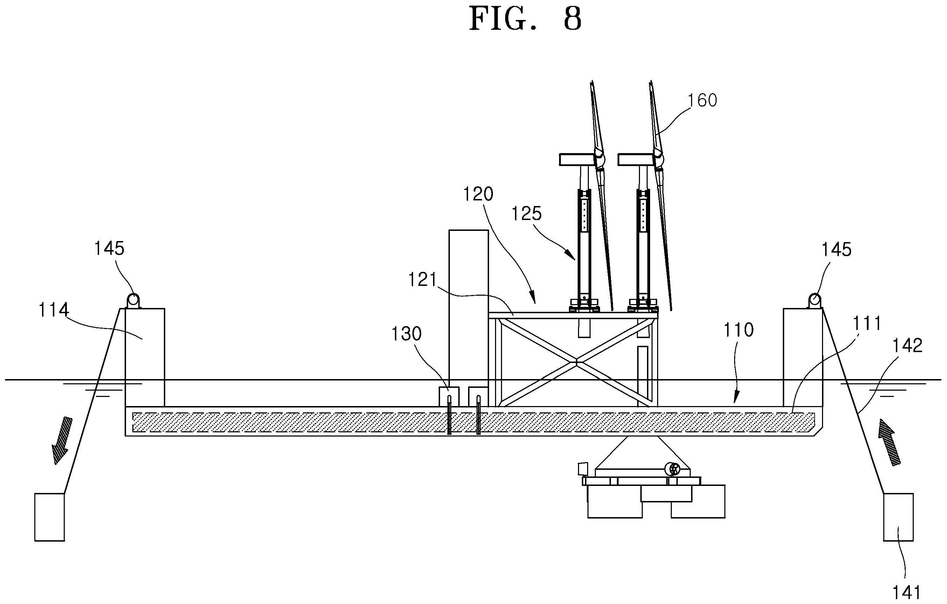

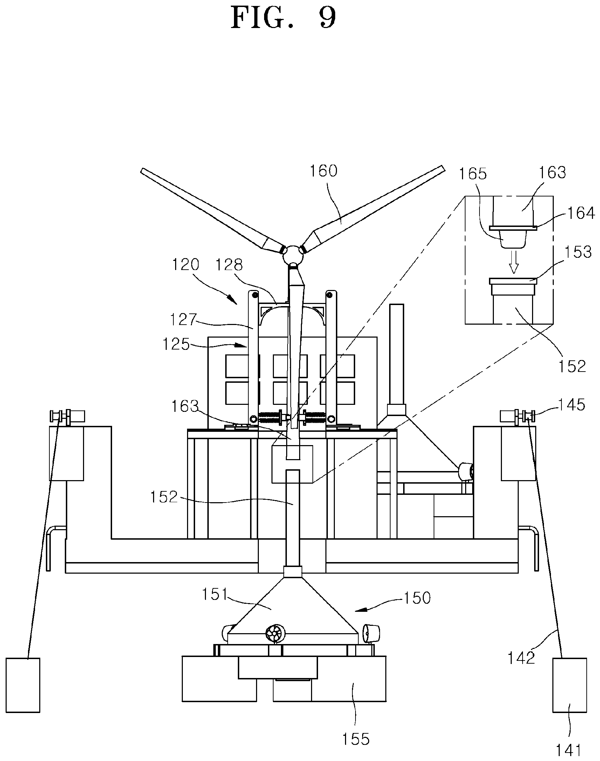

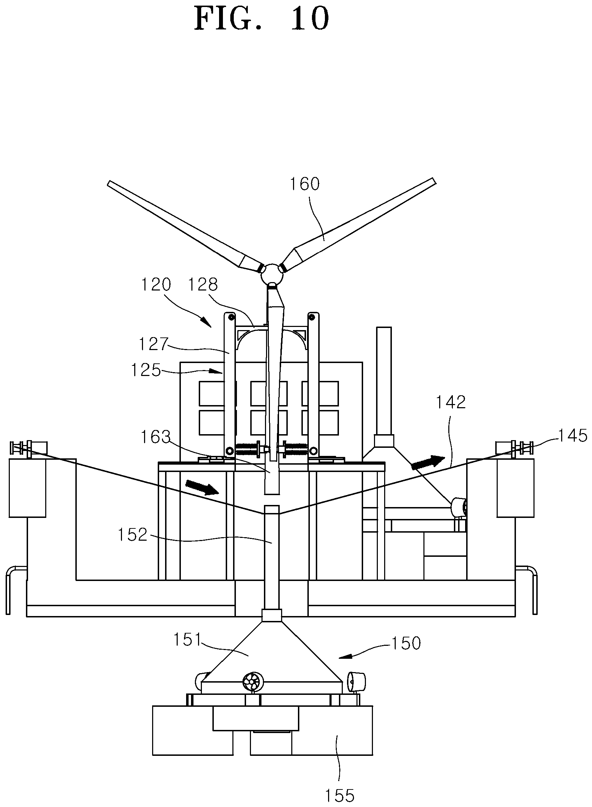

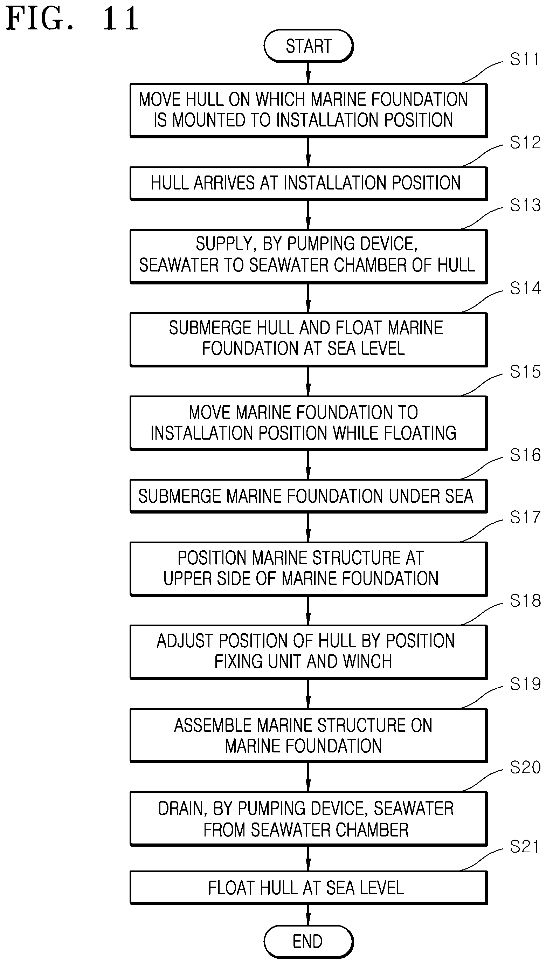

FIG. 4 is a side view illustrating movement of the marine structure installation vessel according to one embodiment of the present invention while floating, FIG. 5 is a side view illustrating a state in which the marine structure installation vessel according to one embodiment of the present invention is submerged, FIG. 6 is a plan view illustrating movement of the marine foundation in the marine structure installation vessel according to one embodiment of the present invention outward from the marine structure installation vessel while floating, FIG. 7 is a plan view illustrating movement of the marine foundation in the marine structure installation vessel according to one embodiment of the present invention to an installation position while floating, FIG. 8 is a side view illustrating position adjustment of the marine structure installation vessel so that a marine structure in the marine structure installation vessel according to one embodiment of the present invention corresponds to the marine foundation, FIG. 9 is a side view illustrating assembly of a marine structure in the marine structure installation vessel according to one embodiment of the present invention and a monopod unit of the marine foundation, FIG. 10 is a side view illustrating assembly position adjustment of the marine foundation and the marine structure by operating winches after wire ropes are connected to the marine structure when the marine structure in the marine structure installation vessel according to one embodiment of the present invention is coupled with the monopod unit of the marine foundation, and FIG. 11 is a flowchart illustrating a method of installing a marine structure according to one embodiment of the present invention.

Referring to FIGS. 4 to 11, the marine structure 160 is installed on the docking device 120, and the marine foundation 150 is mounted on the hull 110. The hull 110 is moved to an installation position by the tug 10 while floating at sea level (S11).

The hull 110 arrives at the installation position (S12), and then the pumping device 130 supplies seawater to the seawater chamber 111 of the hull 110 (S13). As the seawater chamber 111 is filled with the seawater, the hull 110 is gradually submerged under sea level.

In this case, the position fixing units 141 are put under water and all of the winches 145 wind up the wire ropes 142, and thus the hull 110 is submerged under sea level. When the hull 110 is submerged under sea level, the marine foundation 150 mounted in the hull 110 floats at sea level (S14). When the marine foundation 150 floats at sea level, a rope of the tug 10 is connected to the marine foundation 150.

The marine foundation 150 is moved to the installation position while floating at sea level (S15). The marine foundation 150 is moved to the installation position while floating, and thus the marine foundation 150 may be easily moved by the tug 10.

When the marine foundation 150 reaches the installation position, seawater is supplied to the self-weight control tank unit 151 of the marine foundation 150 so that the marine foundation 150 is submerged and installed on the ocean floor (S16). In this case, the opening and closing (not shown) valve installed in the self-weight control tank unit 151 is remotely opened to supply seawater to the self-weight control tank unit 151.

The pumping device 130 discharges the seawater from the seawater chamber 111 of the hull 110 to float the hull 110 at sea level. The hull 110 is moved by the tug 10 while floating. In this case, the hull 110 is moved by the tug 10 so that the marine structure 160 is positioned on an upper side of the marine foundation 150. In this case, the winches 145 disposed in a moving direction of the hull 110 wind up the wire ropes 142, and the winches 145 positioned opposing the moving direction unwind the wire ropes 142.

The hull 110 is moved by the tug 10 so that the marine structure 160 is positioned above the marine foundation 150 (S17). In this case, the hull 110 is moved to an upper side of the marine foundation 150 by the tug 10. When the hull 110 reaches the upper side of the marine foundation 150, the position fixing units 141 are partially submerged in the water. When the position fixing units 141 are completely submerged in the water, the plurality of winches 145 finely adjust the position of the hull 110 to correspond the marine structure 160 to the monopod unit 152 by winding or unwinding the wire ropes 142 (S18). In this case, the hull 110 is submerged under sea level to be less affected due to a wave or tide.

For example, when the marine foundation 150 is positioned to the left of the marine structure 160, the winches 145 positioned on the left side of the hull 110 wind up the wire ropes 142, and the winches 145 positioned on the right side of the hull 110 unwind the wire ropes 142. Therefore, the hull 110 is moved to the left to finely control the position of the hull 110 so that the marine structure 160 is positioned at the upper side of the marine foundation 150. The plurality of winches 145 wind or unwind the wire ropes 142 to move the hull 110 back and forth or from left to right.

Also, the wire ropes 142 wound around the plurality of winches 145 are tied to the monopod unit 152 of the marine foundation 150. Then, the plurality of winches 145 wind or unwind the wire ropes 142 to accurately and finely control an assembly position of the monopod unit 152 of the marine foundation 150.

The marine structure 160 is lowered by the docking device 120 to be assembled on the monopod unit 152 of the marine foundation 150 (S19). In this case, an upper flange unit 164 and a tapered unit 165 are formed at a lower portion of a support 163 of the marine structure 160, and a lower flange unit 153 is rotatably installed at an upper end of the monopod unit 152. Therefore, the tapered unit 165 of the support 163 of the marine structure 160 may be stably assembled on an upper portion of the monopod unit 152. The upper flange unit 164 and the lower flange unit 153 are coupled by a bolt.

The pumping device 130 drains the seawater from the seawater chamber 111 (S20). As the seawater is drained from the seawater chamber 111, the hull 110 floats at sea level (S21). The hull 110 movably floats at sea level by the tug 10 according to reduction of resistance of seawater.

By repeating the process, the marine foundation 150 is submerged and installed in the water, and then the marine structure 160 may be assembled on the marine foundation 150.

As described above, the hull 110 is moved to the installation position of the marine foundation 150 and then supplies seawater to the seawater chamber 111 of the hull 110 to submerge the hull 110, and thus the marine foundation 150 may be moved to the installation position while floating at sea level.

The winches 145 may finely control the position of the hull 110 by winding or unwinding the wire ropes 142, and thus the marine structure 160 may be easily positioned at the marine foundation 150. Also, the marine structure 160 can be installed without a crane, thereby reducing installation costs of the marine structure.

Also, before the hull 110 moves, the pumping device 130 drains seawater from the hull 110, and thus the hull 110 may be moved by the tug 10 while floating at sea level.

According to the present invention, the hull is moved to an installation position of the marine foundation and seawater is supplied to the seawater chamber of the hull to submerge the hull, and thus the marine foundation can be moved to the installation position while floating at sea level.

According to the present invention, a winch can also wind or unwind the wire ropes to finely control a position of the hull, and thus the marine structure can be easily installed on the marine foundation. Also, the marine structure can be installed without a crane to reduce installation costs of the marine structure.

According to the present invention, the pumping device drains the seawater from the hull before the hull is moved, and thus the hull can also be moved by a tug while floating at sea level.

The present invention has been described with reference to the examples illustrated in the drawings, but these are only examples. It should be understood by those skilled in the art that various modifications and equivalent other examples may be made.

Therefore, the scope of the present invention is defined by the appended claims.

## Claims

1. A marine structure (160) installation vessel comprising:
a hull (110) configured to move while floating at sea level, wherein a seawater chamber (111) is formed therein and a marine foundation (150) is loaded thereon;
a docking device (120) mounted on the hull (110) and configured to support a marine structure (160) to be assembled on the marine foundation (150); and
a pumping device (130) configured to supply seawater to the seawater chamber (111) to submerge the hull (110) and float the marine foundation (150) from the hull (110) by buoyancy, and drain the seawater from the seawater chamber (111) so that the hull (110) floats for assembling the marine structure (160) on the marine foundation (150).

2. The marine structure (160) installation vessel of claim 1, further comprising: a position fixing unit (141) connected to a wire rope (142) and configured to fix a position of the hull (110) by being submerged in water; and a winch (145) installed at the hull (110) and configured to control the position of the hull (110) by winding or unwinding the wire rope (142).

3. The marine structure installation vessel of claim 2, wherein a semi-submerged column (114) is formed standing upright on a circumferential part of the hull (110), and the winch (145) is disposed on the semi-submerged column (145).

4. The marine structure installation vessel of claim 1, wherein the hull (110) includes a refloating hole portion (115) formed therein so that the marine structure (160) is lowered under water to be installed on the marine foundation (150).

5. The marine structure installation vessel of claim 4, wherein the docking device (120) includes:
a docking deck (121) installed on the refloating hole portion (115); and
a refloating device (125) movably installed on the docking deck (121) and configured to move the marine structure (160) to a lower side of the refloating hole portion (115).

6. The marine structure installation vessel of claim 5, wherein the refloating device (125) includes:
docking guide units (126) movably installed on both sides of the refloating hole portion (115);
a support column (127) installed on the docking guide unit (126) to be moved by the docking guide units (126); and
a lifting arm (128) installed in the support columns (127) to be lifted and configured to support the marine structure (160).

7. The marine structure installation vessel of claim 1, wherein the marine foundation (150) includes:
a self-weight control tank unit (151) configured to move while floating at sea level, and submerged and installed on an ocean floor as seawater is supplied;
a monopod unit (152) installed in the self-weight control tank unit (151) to be lowered and connected to the marine structure (160);
a guide bucket unit (154) installed under the monopod unit (152) and seated on the ocean floor by discharging the seawater; and
a leg bucket unit (155) installed under the self-weight control tank unit (151).

8. The marine structure installation vessel of claim 7, wherein the marine foundation (150) further includes a thrusting device (156) installed in the self-weight control tank unit (151) and configured to control a submerged installation position of the self-weight control tank unit (151) by applying a thrust to the self-weight control tank unit (151).

9. The marine structure installation vessel of claim 8, wherein the thrust device includes:
a belt unit (157) coupled to the self-weight control tank unit (151); and
a propeller unit (158) installed at the belt unit (157) and configured to generate a thrust at the self-weight control tank unit (151).

10. A method of installing a marine structure, the method comprising:
moving a hull (110) on which a marine foundation (150) is mounted to an installation position while the hull (110) is floating at sea level;
supplying, by a pumping device (130) coupled to the hull (110), seawater to a seawater chamber (111) of the hull (110) after the hull (110) arrives at the installation position;
floating the marine foundation (150) by buoyancy when the seawater is supplied to the seawater chamber (111) to submerge the hull (110);
moving the marine foundation (150) to the installation position while the marine foundation (150) is floating;
supplying seawater to the marine foundation (150) to submerge and install the marine foundation (150) on an ocean floor;
moving the hull (110) and positioning a marine structure (160) supported on a docking device (120) mounted on the hull (110) at an upper side of the marine foundation (150); lowering the marine structure (160) by the docking device (120) and assembling the marine structure (160) on the marine foundation (150) ; and draining, by the pumping device (130), the seawater from the seawater chamber (111) to float the hull (110) at sea level.

11. The method of claim 10, further comprising:
after the moving of the marine foundation (150) to the installation position while the marine foundation (150) is floating,
draining, by the pumping device (130), the seawater from the seawater chamber (111) to float the hull (110) at sea level; and
moving the hull (110) by a tug (10) so that the marine structure (160) is positioned above the marine foundation (150).

12. The method of claim 11, wherein the moving of the hull (110) by the tug (10) so that the marine structure (160) is positioned above the marine foundation (150) includes:
moving the hull (110) to an upper side of the marine foundation (150) by the tug (10);
submerging a position fixing unit (141) connected to the hull (110) by a wire rope (142) in the water; and winding or unwinding, by winches (145) installed on the hull (110), the wire rope (142) to control a position of the hull (110).

## Patentansprüche

1. Installationsfahrzeug für Meeresbauwerk (160) umfassend:
einen Rumpf (110), der dafür eingerichtet ist, sich zu bewegen, während er auf Meereshöhe schwimmt, wobei eine Meerwasserkammer (111) darin gebildet ist und ein Meeresfundament (150) darauf geladen ist;
eine Andockeinrichtung (120), die auf dem Rumpf (110) montiert und dafür eingerichtet ist, ein auf dem Meeresfundament (150) zusammenzubauendes Meeresbauwerk (160) zu unterstützen; und
eine Pumpeneinrichtung (130), die dafür eingerichtet ist, der Meerwasserkammer (111) Meerwasser zuzuführen, um den Rumpf (110) zu untertauchen und das Meeresfundament (150) vom Rumpf (110) durch Auftriebskraft schwimmen zu lassen und das Meerwasser von der Meerwasserkammer (111) zu entleeren, so dass der Rumpf (110) zum Zusammenbauen des Meeresbauwerks (160) auf dem Meeresfundament (150) schwimmt.

2. Installationsfahrzeug für Meeresbauwerk (160) nach Anspruch 1, weiter umfassend:
eine Positionsfestlegungseinheit (141), die mit einem Drahtseil (142) verbunden und dafür eingerichtet ist, eine Position des Rumpfs (110) durch Untertauchen ins Wasser festzulegen; und
eine Winde (145), die am Rumpf (110) installiert ist und dafür eingerichtet ist, die Position des Rumpfs (110) durch Aufwickeln oder Abwickeln des Drahtseils (142) zu steuern.

3. Installationsfahrzeug für Meeresbauwerk nach Anspruch 2, wobei eine halbuntergetauchte Säule (114) gebildet ist, die auf einem umfänglichen Teil des Rumpfs (110) aufrecht steht, und die Winde (145) auf der halbuntergetauchten Säule (145) angeordnet ist.

4. Installationsfahrzeug für Meeresbauwerk nach Anspruch 1, wobei der Rumpf (110) einen darin gebildeten Lochabschnitt (115) zur Wiederflottmachung aufweist, so dass das Meeresbauwerk (160) unter Wasser abgesenkt wird, um auf dem Meeresfundament (150) installiert zu werden.

5. Installationsfahrzeug für Meeresbauwerk nach Anspruch 4, wobei die Andockeinrichtung (120) Folgendes aufweist:
ein Andockdeck (121), das auf dem Lochabschnitt (115) zur Wiederflottmachung installiert ist; und
eine Wiederflottmachungseinrichtung (125), die auf dem Andockdeck (121) beweglich installiert ist und dafür eingerichtet ist, das Meeresbauwerk (160) zu einer unteren Seite des Lochabschnitts (115) zur Wiederflottmachung zu bewegen.

6. Installationsfahrzeug für Meeresbauwerk nach Anspruch 5, wobei die Wiederflottmachungseinrichtung (125) Folgendes aufweist:
Andockführungseinheiten (126), die auf beiden Seiten des Lochabschnitts (115) zur Wiederflottmachung beweglich installiert sind;
eine Unterstützungssäule (127), die auf der Andockführungseinheit (126) installiert ist, um durch die Andockführungseinheiten (126) bewegt zu werden; und
einen Hubarm (128), der um gehoben zu werden in den Unterstützungssäulen (127) installiert ist und dafür eingerichtet ist, das Meeresbauwerk (160) zu unterstützen.

7. Installationsfahrzeug für Meeresbauwerk nach Anspruch 1, wobei das Meeresfundament (150) Folgendes aufweist:
eine Eigengewichtsteuerungstankeinheit (151), die dafür eingerichtet ist, sich zu bewegen, während sie auf Meereshöhe schwimmt, und untergetaucht und auf den Meeresboden installiert zu werden als Meerwasser zugeführt wird;
eine einbeinige Einheit (152), die in der Eigengewichtsteuerungstankeinheit (151) installiert ist, um abgesenkt und mit dem Meeresbauwerk (160) verbunden zu werden;
eine Führungseimereinheit (154), die unter der einbeinigen Einheit (152) installiert ist und auf den Meeresboden durch Entlassung des Meerwassers gesetzt wird; und
eine Schenkeleimereinheit (155), die unter der Eigengewichtsteuerungstankeinheit (151) installiert ist.

8. Installationsfahrzeug für Meeresbauwerk nach Anspruch 7, wobei das Meeresfundament (150) weiter eine Stoßeinrichtung (156) umfasst, die in der Eigengewichtsteuerungstankeinheit (151) installiert ist und dafür eingerichtet ist, eine untergetauchte Installationsposition der Eigengewichtsteuerungstankeinheit (151) durch Anlegen eines Stoßes auf die Eigengewichtsteuerungstankeinheit (151) zu steuern.

9. Installationsfahrzeug für Meeresbauwerk nach Anspruch 8, wobei die Stoßeinrichtung Folgendes aufweist:
eine Gurteinheit (157), die mit der Eigengewichtsteuerungstankeinheit (151) verbunden ist; und
eine Propellereinheit (158), die an der Gurteinheit (157) installiert ist und dafür eingerichtet ist, einen Stoß an der Eigengewichtsteuerungstankeinheit (151) zu erzeugen.

10. Verfahren zum Installieren eines Meeresbauwerks, welches Verfahren Folgendes umfasst:
Bewegen eines Rumpfs (110), auf dem ein Meeresfundament (150) zu einer Installationsposition montiert ist, während der Rumpf (110) auf Meereshöhe schwimmt;
Zuführen, durch eine mit dem Rumpf (110) verbundene Pumpeneinrichtung (130), von Meerwasser zu einer Meerwasserkammer (111) des Rumpfs (110), nachdem der Rumpf (110) die Installationsposition erreicht;
durch Auftriebskraft das Meeresfundament (150) schwimmen zu lassen, wenn Meerwasser zur Meerwasserkammer (111) zugeführt wird, um den Rumpf (110) zu untertauchen;
Bewegen des Meeresfundaments (150) zu einer Installationsposition, während das Meeresfundament (150) schwimmt;
Zuführen von Meerwasser zum Meeresfundament (150), um das Meeresfundament (150) auf den Meeresboden zu untertauchen und darauf zu installieren;
Bewegen des Rumpfs (110) und Positionieren eines Meeresbauwerks (160), das auf einer Andockeinrichtung (120) unterstützt wird, die auf dem Rumpf (110) an einer oberen Seite des Meeresfundaments (150) montiert ist;
Absenken des Meeresbauwerks (160) durch die Andockeinrichtung (120) und Zusammenbauen des Meeresbauwerks (160) auf dem Meeresfundament (150); und
Entleeren, durch die Pumpeneinrichtung (130), das Meerwasser von der Meerwasserkammer (111), um den Rumpf (110) auf Meereshöhe schwimmen zu lassen.

11. Verfahren nach Anspruch 10, weiter umfassend:
nach dem Bewegen des Meeresfundaments (150) zu einer Installationsposition, während das Meeresfundament (150) schwimmt,
Entleeren, durch die Pumpeneinrichtung (130), das Meerwasser von der Meerwasserkammer (111), um den Rumpf (110) auf Meereshöhe schwimmen zu lassen; und
Bewegen des Rumpfs (110) durch einen Schlepper (10), so dass das Meeresbauwerk (160) über dem Meeresfundament (150) positioniert wird.

12. Verfahren nach Anspruch 11, wobei das Bewegen des Rumpfs (110) durch einen Schlepper (10), so dass das Meeresbauwerk (160) über dem Meeresfundament (150) positioniert wird, Folgendes umfasst:
Bewegen des Rumpfs (110) zu einer oberen Seite des Meeresfundaments (150) durch den Schlepper (10);
Untertauchen einer Positionsfestlegungseinheit (141), die mit dem Rumpf (110) durch ein Drahtseil (142) verbunden ist, in das Wasser; und
Aufwickeln oder Abwickeln, durch auf dem Rumpf (110) installierte Winden (145), des Drahtseils (142), um eine Position des Rumpfs (110) zu steuern.

## Revendications

1. Vaisseau d'installation de structure marine (160) comprenant :
une coque (110) configurée pour se déplacer tout en flottant au niveau de la mer, une chambre d'eau de mer (111) étant y formée et une fondation marine (150) étant chargée sur celle-ci ;
un dispositif d'amarrage (120) monté sur la coque (110) et configuré pour supporter une structure marine (160) à assembler sur la fondation marine (150) ; et
un dispositif de pompage (130) configuré pour fournir de l'eau de mer à la chambre d'eau de mer (111) pour immerger la coque (110) et faire flotter la fondation marine (150) à partir de la coque (110) par flottabilité, et drainer l'eau de mer de la chambre d'eau de mer (111) si bien que la coque (110) flotte pour assembler la structure marine (160) sur la fondation marine (150).

2. Vaisseau d'installation de structure marine (160) selon la revendication 1, comprenant en outre :
une unité de fixation de position (141) reliée à un câble métallique (142) et configurée pour fixer une position de la coque (110) en étant immergée dans de l'eau ; et
un treuil (145) installé à la coque (110) et configuré pour commander la position de la coque (110) en enroulant ou déroulant le câble (142).

3. Vaisseau d'installation de structure marine selon la revendication 2, dans lequel une colonne semi-immergée (114) est formée debout sur une partie circonférentielle de la coque (110), et le treuil (145) est disposé sur la colonne semi-immergée (145).

4. Vaisseau d'installation de structure marine selon la revendication 1, dans lequel la coque (110) comprend une partie de trou de renflouage (115) y formée si bien que la structure marine (160) est abaissée sous l'eau pour être installée sur la fondation marine (150).

5. Vaisseau d'installation de structure marine selon la revendication 4, dans lequel le dispositif d'amarrage (120) comprend :
une plate-forme d'amarrage (121) installée sur la partie de trou de renflouage (115) ; et
un dispositif de renflouage (125) installé de manière mobile sur la plate-forme d'amarrage (121) et configuré pour déplacer la structure marine (160) vers un côté inférieur de la partie de trou de renflouage (115).

6. Vaisseau d'installation de structure marine selon la revendication 5, dans lequel le dispositif de renflouage (125) comprend :
des unités de guidage d'amarrage (126) installées de manière mobile sur les deux côtés de la partie de trou de renflouage (115);
une colonne de support (127) installée sur l'unité de guidage d'amarrage (126) pour être déplacée par les unités de guidage d'amarrage (126); et
un bras de levage (128) installé dans les colonnes de support (127) à soulever et configuré pour supporter la structure marine (160).

7. Vaisseau d'installation de structure marine selon la revendication 1, dans lequel la fondation marine (150) comprend :
une unité de réservoir de contrôle d'auto-poids (151) configurée pour se déplacer tout en flottant au niveau de la mer et immergée et installée sur un fond océanique en tant que l'eau de mer est fournie ;
une unité de monopode (152) installée dans l'unité de réservoir de contrôle d'auto-poids (151) à abaisser et connecter à la structure marine (160) ; et
une unité de baquet de guidage (154) installée sous l'unité de monopode (152) et installée sur le fond océanique en évacuant l'eau de mer ; et
une unité de baquet de jambe (155) installée sous l'unité de réservoir de contrôle d'auto-poids (151).

8. Vaisseau d'installation de structure marine selon la revendication 7, dans lequel la fondation marine (150) comprend en outre un dispositif de poussée (156) installé dans l'unité de réservoir de contrôle d'auto-poids (151) et configuré pour commander une position d'installation immergée de l'unité de réservoir de contrôle d'auto-poids (151) en appliquant une poussée à l'unité de réservoir de contrôle d'auto-poids (151).

9. Vaisseau d'installation de structure marine selon la revendication 8, dans lequel le dispositif de poussée comprend :
une unité de courroie (157) couplée à l'unité de réservoir de contrôle d'auto-poids (151) ; et
une unité d'hélice (158) installée sur l'unité de courroie (157) et configurée pour générer une poussée à l'unité de réservoir de contrôle d'auto-poids (151).

10. Procédé d'installation d'une structure marine, le procédé comprenant :
le déplacement d'une coque (110) sur laquelle une fondation marine (150) est montée dans une position d'installation pendant que la coque (110) flotte au niveau de la mer ;
la fourniture, par un dispositif de pompage (130) couplé à la coque (110), d'eau de mer à une chambre d'eau de mer (111) de la coque (110) après l'arrivée de la coque (110) à la position d'installation ;
la flottation de la fondation marine (150) par flottabilité lorsque l'eau de mer est fournie à la chambre d'eau de mer (111) pour immerger la coque (110) ;
le déplacement de la fondation marine (150) à la position d'installation pendant que la fondation marine (150) est flottante ;
la fourniture d'eau de mer à la fondation marine (150) pour submerger et installer la fondation marine (150) sur le fond océanique ;
le déplacement de la coque (110) et positionnement d'une structure marine (160) supportée sur un dispositif d'amarrage (120) monté sur la coque (110) sur un côté supérieur de la fondation marine (150) ;
l'abaissement de la structure marine (160) par le dispositif d'amarrage (120) et l'assemblage de la structure marine (160) sur la fondation marine (150); et
le drainage, par le dispositif de pompage (130), de l'eau de mer de la chambre d'eau de mer (111) pour faire flotter la coque (110) au niveau de la mer.

11. Procédé selon la revendication 10, comprenant en outre:
après le déplacement de la fondation marine (150) à la position d'installation pendant que la fondation marine (150) est flottante,
le drainage, par le dispositif de pompage (130), de l'eau de mer de la chambre d'eau de mer (111) pour faire flotter la coque (110) au niveau de la mer; et
le déplacement de la coque (110) par un remorqueur (10) si bien que la structure marine (160) est positionnée au-dessus de la fondation marine (150).

12. Procédé selon la revendication 11, dans lequel le déplacement de la coque (110) par un remorqueur (10) si bien que la structure marine (160) est positionnée au-dessus de la fondation marine (150) comprend :
le déplacement de la coque (110) à un côté supérieur de la fondation marine (150) par le remorqueur (10) ;
l'immersion d'une unité de fixation de position (141) reliée à la coque (110) par un câble métallique (142) dans l'eau ; et
l'enroulement et le déroulement par des treuils (145) installés à la coque (110) du câble métallique (142) pour commander une position de la coque (110).
